# EUROPEAN PATENT APPLICATION

(11) **EP 4 442 460 A1**
(43) Date of publication of application: **09.10.2024**
(21) Application number: 23166660.3
(22) Date of filing: 05.04.2023
(51) Int. Cl.: B32B 27/08, C08L 23/12, C08L 53/02, A61F 13/49

(54) **THERMOPLASTIC ELASTOMERIC COMPOSITIONS**

(71) Applicant: Kuraray Europe GmbH, 65795 Hattersheim (DE)
(72) Inventor: Gründken, Marcel, 65795 Hattersheim am Main (DE)
(74) Representative: Janßen, Christian Oliver

(57) **Abstract**

The present invention relates to thermoplastic elastomeric compositions comprising a block copolymer (I) comprising a polymer block containing a structural unit derived from an aromatic vinyl compound and a polymer block containing a structural unit derived from farnesene, multilayers films and laminates comprising the same as well as the use of these films and laminates in disposable hygiene and medical products.

## Description

The present invention relates to thermoplastic elastomeric compositions comprising a block copolymer comprising a polymer block containing a structural unit derived from an aromatic vinyl compound and a polymer block containing a structural unit derived from farnesene, multilayers films and laminates comprising the same as well as the use of these films and laminates in disposable hygiene and medical products.

Disposable hygiene and medical articles often comprise a elastomeric composition, e.g. in form of laminates used in the waistbands and elastic ears. Such elastomeric laminates must meet specific properties such as softness, elasticity, tensile strength, stress-relaxation, and desirable levels of tension at various levels of extension. Furthermore, the materials from which the compositions are made have to be low in price since the hygiene and medical products containing them are generally disposable.

On the other hand, there has been an increasing demand for using biomass-derived, also called bio-based, raw materials for these articles due to an increased environmental consciousness.

Simple examples of such bio-based materials are vegetable oils used as plasticizers. However, such purely natural products are not available for all polymer applications. In these cases, an approach can be chosen in which polymers are used that are often referred to as "hybrid bio". In this approach, building blocks of natural origin are used in combination with conventional starting materials in a synthetic process to yield polymers with a certain content of bio-based origin. For example, β-farnesene can be extracted from sugarcane as a natural building block and converted into a block copolymer comprising a polymer block containing a structural unit derived from an aromatic vinyl compound and a polymer block containing a structural unit derived from farnesene, which are partially bio-based.

However, previous studies by the current inventors have shown that these products cannot always be used as a drop-in alternative to replace the conventional products. It has rather been noticed that the properties of compositions and laminates thus produced were insufficient for some applications in hygiene products.

Thus, one object of the present invention was the provision of thermoplastic elastomeric compositions with bio-based content showing sufficient softness, elasticity, tensile strength, stress-relaxation, and/or processibility.

These and other problems have been solved by the present invention.

Accordingly, a first aspect of the present application concerns a thermoplastic elastomer composition comprising
a. a block copolymer (I) comprising a polymer block containing a structural unit derived from an aromatic vinyl compound and a polymer block containing a structural unit derived from farnesene,
b. a block copolymer (II) comprising a polymer block containing a structural unit derived from an aromatic vinyl compound and a polymer block containing a structural unit derived from a conjugated diene compound,
c. a polyolefin elastomer, and
d. a plasticizer.

The term "thermoplastic" shall have its normal meaning, namely, a substance that can become plastic on heating and hardens on cooling through multiple cycles as would be understood by a person of ordinary skill in the relevant art.

The term "elastomer" also shall have its normal meaning, namely, a substance that has elastic properties, as would be understood by a person of ordinary skill in the relevant art.

The structural unit derived from farnesene ("farnesene unit") in the block copolymer (I) comprising a polymer block containing a structural unit derived from an aromatic vinyl compound and a polymer block containing a structural unit derived from farnesene may be α-farnesene or β-farnesene represented by the following formula (1), but β-farnesene is preferred due to the ease of manufacture. It should be noted that α-farnesene may be used in combination with β-farnesene.

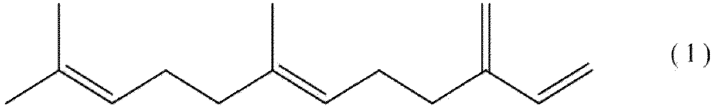

The aromatic vinyl compound ("styrene unit") in the block copolymer (I) comprising a polymer block containing a structural unit derived from an aromatic vinyl compound and a polymer block containing a structural unit derived from farnesene may be a structural unit derived from an aromatic vinyl compound. Examples of such aromatic vinyl compounds include styrene, α-methylstyrene, 2-methylstyrene, 3-methylstyrene, 4-methylstyrene, 4-propylstyrene, butylstyrene 4-t-, 4-cyclohexylstyrene, 4-dodecylstyrene, 2,4-dimethylstylene, 2,4-diisopropylstyrene, 2,4,6-trimethylstyrene, 2-ethyl-4-benzylstylene, 4-(phenylbutyl)styrene, 1-vinylnaphthalene, 2-vinylnaphthalene, vinylanthracene, N,N-diethyl-4-aminoethylstylene, vinyl pyridine, 4-dichlorobenylstyrene, dichlorostyrene, and mixtures thereof. Of these, styrene, α-methylstyrene and 4-methylstyrene are preferred, and styrene is more preferred.

The bonding configuration of the units is not particularly limited, and may be either a linear configuration, a branched configuration, a radial configuration or a combination of these configurations. Of these configurations, preferred is the configuration in which the units are linearly bonded to each other, and more preferably is the configuration represented by (A-B)ₗ, A-(B-A)ₘ, B-(AB)ₙ or C-(AB)ₒ, wherein A, B and C are the styrene unit (A) the farnesene unit (B) and the conjugated diene such as butadiene and isoprene, respectively, and 1, m, n and o are each independently an integer of 1 or more.

Preferably, the block copolymer (I) comprising a polymer block containing a structural unit derived from an aromatic vinyl compound and a polymer block containing a structural unit derived from farnesene has a bio-based content measured according to ASTM 6868 and as further described below of equal to or more than 250, more preferably more than 40%, even more preferably more than 500 and most preferably more than 700.

Also preferably, the block copolymer (I) comprising a polymer block containing a structural unit derived from an aromatic vinyl compound and a polymer block containing a structural unit derived from farnesene has a bio-based content measured according to ASTM 6868 and as further described below from 45% to 85%, more preferably from 550 to 75%.

Suitable polyolefin elastomers include, for example, propylene/ethylene random copolymers, propylene/ethylene block copolymers, propylene/butane random copolymers, propylene/ethylene/butene block copolymers, propylene/pentene random copolymers, propylene/hexene random copolymers, propylene/octene random copolymers, propylene/ethylene/pentene random copolymers, propyle11e/ethylene/hexene random copolymers, or mixtures thereof.

Preferably, the polyolefin elastomer according to the present invention comprises propylene and ethylene units. Suitable examples of commercial available polyolefin elastomers comprising propylene and ethylene units include those available under the VISTAMAXX^{®} brand from ExxonMobil Chemical, including but not limited to the following grades: 2330; 3000; 3020; 3980; 6102; 6202; and 6502; the QUEO^{™} brand from Borealis, including but not limited to the following grades: 0201, 0203, 0210, 8201 8203, 8210, 8230; as well as the INFUESE^{™} and ENGAGE^{™} brands from DOW Chemical.

Also preferably, the ethylene content in the polyolefin elastomer is higher than 5 wt%, more preferably higher than 10 wt%, most preferably higher than 15 wt% and specifically (around) 16 wt%.

Also preferably, the thermoplastic elastomer composition comprises from 35 to 90 wt% polyolefin elastomer, more preferably from 50 to 85 wt%, more preferably from 55 to 75 wt%, and most preferably around 60 wt%.

Suitable plasticizers are known in the art and include, but are not limited to, a mineral oil such as paraffinic process oil and naphthenic process oil; a vegetable oil, such as rapeseed oil, peanut oil and rosin; a phosphoric acid ester; a low molecular weight polyethylene glycol; a liquid paraffin; a low molecular weight ethylene, ethylene-alpha-olefin copolymerized oligomer; a liquid polybutene; a liquid polyisoprene or its hydrogenated equivalent; a synthetic oil such as liquid polybutadiene or isoprene, or mixtures of the above.

The amount of plasticizer present in the inventive thermoplastic elastomer composition is preferably from 5 to 20 wt%, more preferably from 7 to 15 wt% and most preferably from 8 to 12 wt%.

The plasticizer may also include a synthetic hydrocarbon resin or tackifier, e.g. alpha-methylstyrene (AMS), terpene resins, polyterpenes, terpene phenol resins, rosin esters; aliphatic, cycloaliphatic or aromatic, C5, C9, hydrogenated or partly-hydrogenated resins or combinations thereof.

Preferably, the plasticizer is an oil with a bio-based content measured according to ASTM 6868 and as further described below of equal to or more than 750, more preferably more than 85% and even more preferably more than 950.

Also preferably, the plasticizer is a compound of general structure (III): 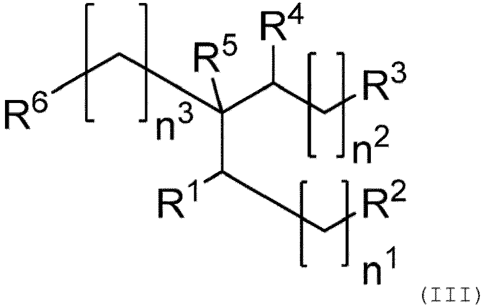 wherein each n1, n2 and n3 are independently 1 or 3, R1 to R6 are independently hydrogen or an unsubstituted alkyl group.

The melting point of the plasticizer is not particularly limited, but is preferably -70 ºC or more, more preferably -50 ºC or more, and is preferably 20 ºC or less, more preferably 10 ºC or less, and still more preferably 0 ºC or less.

Specific examples of the plasticizer include compounds represented by the following structural formulas:

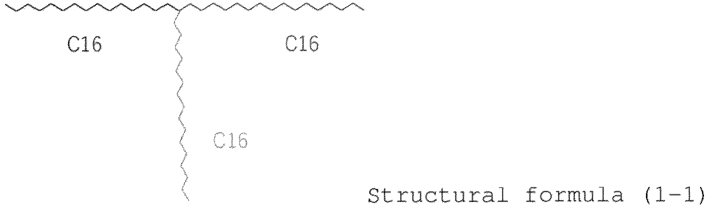

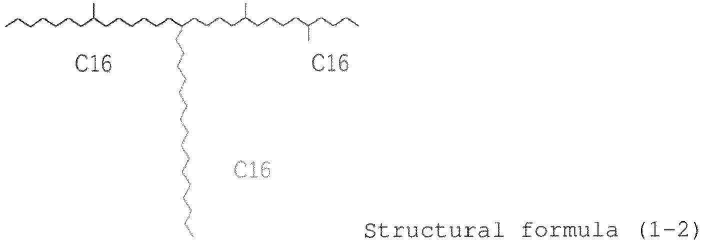

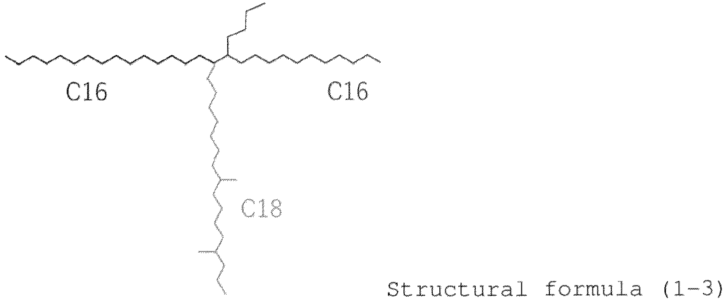

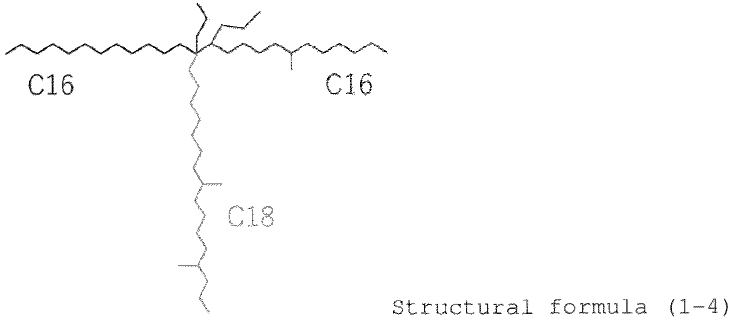

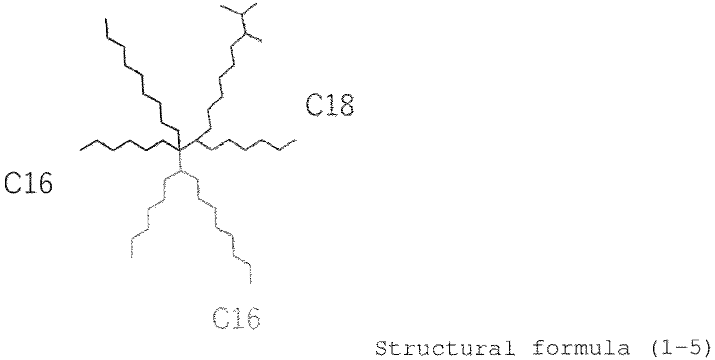

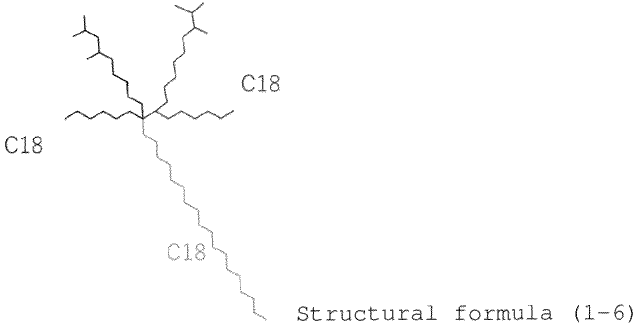

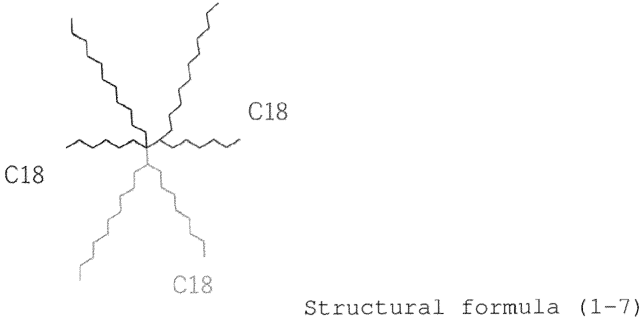

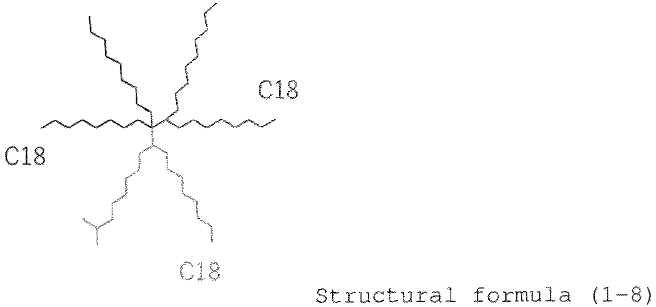

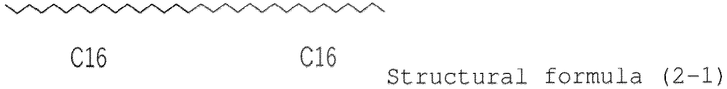

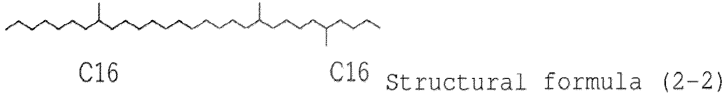

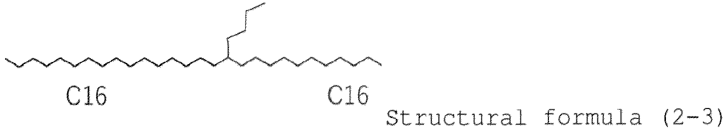

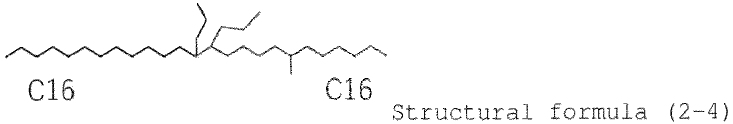

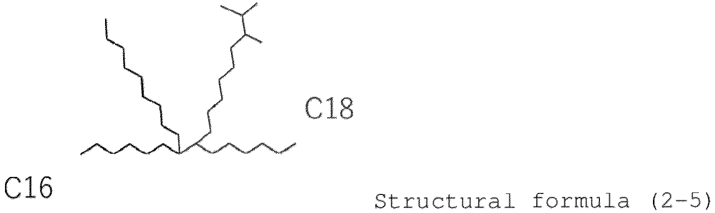

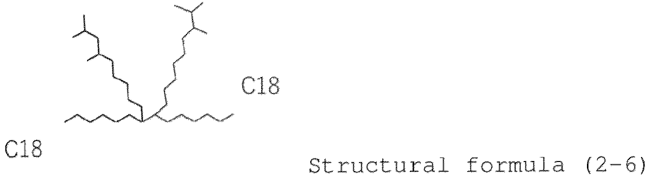

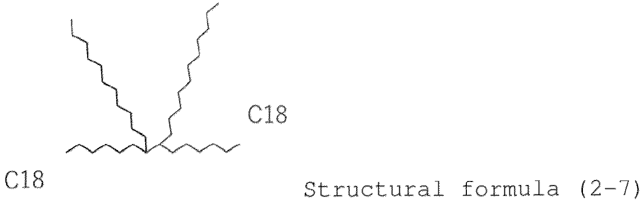

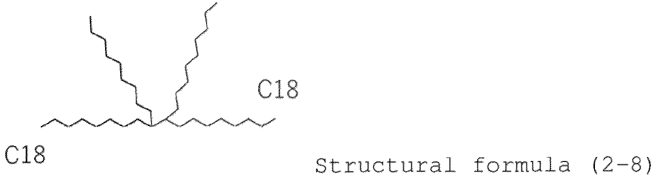

The block copolymer (II) comprises a polymer block containing a structural unit derived from an aromatic vinyl compound and a polymer block containing a structural unit derived from a conjugated diene compound.

Preferably, the block copolymer (II) is a hydrogenated styrene-b-ethylene/propylene-b-styrene block copolymer (SEPS), a styrene-b-ethylene/ethylene/propylene-b-styrene (SEEPS) or a hydrogenated styrene-b-butadiene-b-styrene (SEBS). Such block copolymers are known in the art and commercially available.

Preferred examples of styrene-b-ethylene-ethylene-propylene-b-styrene block copolymers (SEEPS) include SEPTON^{™} 4033, SEPTON^{™} 4055, SEPTON^{™} 4077, SEPTON^{™} 4099, SEPTON^{™} HG252 as well as mixtures thereof, and can be obtained from Kuraray Co., Ltd.

Preferably, the styrene-b-ethylene-ethylene-propylene-b-styrene block copolymer (SEEPS) has a styrene content from 20 to 40 wt%, more preferably from 25 to 35 wt% and most preferably from 28 to 32 wt%.

Also preferably, the styrene-b-ethylene-ethylene-propylene-b-styrene block copolymer (SEEPS) have a melt flow index (230°C, 2.16 kg) of less than 1.0 g/10 min, most preferably of less than 0.1 g/10 min.

Also preferably, the thermoplastic elastomer composition according to the invention comprises 5 to 55 wt% styrene-b-ethylene-ethylene-propylene-b-styrene block copolymer (SEEPS), more preferably 10 to 50 wt%, more preferably 15 to 35 wt%, and most preferably 15 to 25 wt%.

The inventive thermoplastic elastomer compounds may include one or more additives.

Suitable optional additives include conventional or commercially available additives. These additives can be used in any amount that is sufficient to obtain a desired processing or performance property for the thermoplastic elastomer compound and/or the elastomeric film formed therefrom. Suitable example include antioxidants and stabilizers; bonding agents; colorants such as pigments or dyes; impact modifiers; non-elastomeric thermoplastic polymer; tackifiers; ultraviolet light absorbers; waxes; attractants such as mosquito attractants or fly attractants; and mixtures thereof.

The inventive thermoplastic elastomer composition may also include one or more other components selected from the list comprising polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), thermoplastic elastomers (TPE), thermoplastic polyurethanes (TPU), polyethylenes (PE), polypropylenes (PP), ethylene vinyl alcohols (EVOH), acrylonitrile styrene acrylate (ASA), polyacrylates, polyterpenes, polyphenols and polymethacrylates. Such components can be present, for example, to adjust processibility or other properties in the thermoplastic elastomer compound. Suitable non-elastomeric thermoplastic polymer should be compatible with the polyolefin elastomer blend and the SEEPS block copolymer. Such polyolefins are commercially available from a number of sources.

Also preferably, the inventive thermoplastic elastomer composition comprises less than 7 wt% of one or more thermoplastic polymers selected from the list consisting of polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), thermoplastic elastomers (TPE), thermoplastic polyurethanes (TPU), (homo)polyethylenes (PE), (homo)polypropylenes (PP), ethylene vinyl alcohols (EVOH), acrylonitrile styrene acrylate (ASA), polyacrylates, polyterpenes, polyphenols, and polymethacrylates. The amount of less than 7 wt% shall mean that the combined amounts of such thermoplastic polymers present in the composition shall be below said 7 wt%. More preferably, the inventive thermoplastic elastomer composition comprises less than 7 wt% of one or more polystyrene and/or (homo)polypropylene polymers. More preferably, the inventive thermoplastic elastomer composition comprises less than 3 wt% of one or more polystyrene and/or (homo)polypropylene polymers. Most preferably, the thermoplastic elastomer composition comprises no polypropylene homopolymers.

The inventive thermoplastic elastomer composition may also include other styrene block copolymers, e.g. styrene-isoprene-styrene (SIS), styrene-butadiene-styrene (SBS), including their derivative e.g. 1,2-vinyl rich isoprene and butadiene types, graft and star copolymers, alpha-methylstyrene type, di-block, tri-block, tetra-block or maleic anhydride or hydroxy functionalized.

Preferably, the thermoplastic elastomer composition has a total bio-based content measured according to ASTM 6868 and as further described below of from 5% to 70%, more preferably between 100 and 50%, and most preferably between 150 and 350.

A further aspect of the present invention concerns a multilayer film comprising a core layer sandwiched between two skin layers wherein
a. the core layer comprises the thermoplastic elastomer composition as described above, and
b. the two skin layers each comprise at least one polyolefin.

Preferably, the polyolefin in the skin layers is a homo polyolefin, more preferably a homo ethylene or a homo propylene. The amount of homo polyolefin in the skin layers is preferably between 60 and 950, more preferably between 70 and 900.

Also preferably, the skin layers independently further comprise
- a block copolymer (I) comprising a polymer block containing a structural unit derived from an aromatic vinyl compound and a polymer block containing a structural unit derived from farnesene,
- a block copolymer (II) comprising a polymer block containing a structural unit derived from an aromatic vinyl compound and a polymer block containing a structural unit derived from a conjugated diene compound, and/or
- a polyolefin elastomer.

Also preferably, the skin layers independently comprise a block copolymer (I) comprising a polymer block containing a structural unit derived from an aromatic vinyl compound and a polymer block containing a structural unit derived from farnesene with a bio-based content measured according to ASTM 6868 and as further described in the description from 45% to 85% in an amount from 5% to 200. a film comprising the thermoplastic elastomer composition as described above as well as a process for the production of such a film by extrusion, especially by co-extrusion, blown film extrusion or cast film extrusion.

Also preferably, the skin layers individually have a thickness of from 10 to 150 µm, more preferably from 20 to 80 µm.

Also preferably, the skin layers individually have a density from 10 to 100 g/m³, more preferably, 20 to 50 g/m³.

Yet another aspect of the present invention concerns a laminate comprising the film as described before and a non-woven textile-like fabric based on polyamide (PA), polyethylene terephthalate (PET), polypropylene (PP), polyethylene (PE), cotton or a mixture thereof (e.g. bi-component nonwovens). A further aspect concerns the use of the films or the laminates in disposable hygiene and medical products including diapers, sanitary pads, face masks, covers, elastic patches and insect capturing sheets such as mosquito capturing sheets or fly capturing sheets.

Such laminates can be produced by any conventionally known technique, for example by co-extrusion, thermobonding, adhesive bonding or ultrasonic bonding. They may advantageously be activated before use, for example by stretching or using the ring roll technique.

The films or laminates can be used, for example, as pull tabs, side tabs, side panels, back ears, waistbands, laminate layers, chassis elements, and the like.

The following examples illustrate the invention.

### Examples

### Preparation of pre-mixes PM1 to PM4

Pre-mixtures for the film preparation were compounded on a corotating twin screw compounder available from Maris with a diameter of 58 mm, a Length-to-Diameter-ratio (LD) of 55, no screens. No melt pump was used. The materials were pre-blended on a highspeed batch type mixer, with app. 100 litter volume, in-line of the compounding feeder. The compounding temperature was controlled from 20 °C (inlet) to 190 °C (die), app. 500 rpm screw speed, underwater cutting, use of antiblocking agents.

### Production of the films

Films were produced on a cast film extrusion line with the following setup: 3-layer co-extrusion with the configuration A/B/A (see below in table 1), screw dimensions of extruder A: diameter 20 mm, length 500 mm, B: diameter 30 mm, length 900 mm. Die with width of 300 mm, T-die type. Temperature settings: 205 °C (extruder), 225-235 °C (feedblock and die), 4 °C (chill roll). Pull-up: approximately 10 m/min (variable). The film thickness was set to 45 µm and normalized to compare different recipes.

### Evaluation

The elastic properties of the films were evaluated. The 2nd cycle load point at 100% strain determines the force necessary to stretch the diaper closing system. The 2nd cycle unload stress point at 50% determines the remaining stress after stretching. Both parameter are associated with the holding force of the diaper closing system and provides an indication of the stable wear and comfort during wear.

### Measurement of bio-based content

"Bio-based content" is an indicator indicating the content ratio of a bio-derived substance in the target substance, which is measured according to a ASTM D6866.

**Table 1, all % are wt%**

| | **C1** | **C2** | **E1** | **E2** | **E3** |
|---|---|---|---|---|---|
| Layer A (both outer layers, each 2 µm) | 750 PP¹ | 90% PP¹ | | | |
| | 25% SEEPS³ | 100 HSFC⁴ | 90% PP¹ | 90% PP¹ | 90% PP¹ |
| | | | 10% HSFC⁴ | 10% HSFC⁴ | 10% HSFC⁴ |
| Bio or renewable based content (outer layer) | 0% | 80 | 8% (100%)⁵ | 8% (100%)⁵ | 8% (100%)⁵ |
| Layer B (middle layer, 41 pm) | 60% POE² / 40% PM1 | 1000 HSFC⁴ | *60%* POE² / *40% PM2* | 600 POE² / 40% PM3 | 40% POE² / 60% PM3 |
| Bio or renewable based content (middle layer) | 0% | 50% | 200 | 240 | 360 |
| 2nd Cycle Load | 0.89 | too low (< 0.10) | *0.65* | *0.68* | *0.49* |
| 2nd Cycle Unload | 0.27 | too low (< 0.05) | *0.23* | *0.22* | *0.24* |
| Tear Resistance | Medium | Medium | Medium | Medium | Medium |
| Processibility | Good | Difficult | Good | Good | Moderate |

| | | | | | |
|---|---|---|---|---|---|
| ¹) Polypropylene homopolymer, type 520P, manufacturer: Sabic ²) Polyolefin elastomer VISTAMAXX^{®} 6102, manufacturer: ExxonMobil ³) Styrene-b-ethylene/ethylene/propylene-b-styrene, type HYBRAR^{™} 7311F, manufacturer: Kuraray Co., Ltd. ⁴) Hydrogenated styrene farnesene block copolymer, type SEPTON^{™} BIO-series SF904, manufacturer: Kuraray Co., Ltd. ⁵) Mass-balance offered equivalent type of 520P. | | | | | |

The pre-mixtures were produced on a twin-screw compounder according the above description. The composition is as follows:
**PM1:** 74.5% SEBS (SEPTON^{™} 8004, manufacturer: Kuraray Co., Ltd.), 24.5% Processing Oil (Paraffinic, medical quality, type Oyster 261, manufacturer Petroyag), <1% Processing Aids (antioxidant, silica, talc)
**PM2:** 49.9% SEEPS (SEPTON^{™} 4033, manufacturer: Kuraray Co., Ltd.), 49.9% Bio-based Processing Oil (VIVASPE 10277), <1% Processing Aids (antioxidant, silica, talc)
**PM3:** 39.90 SEEPS (SEPTON^{™} 4033, manufacturer: Kuraray Co., Ltd.), 39.90 Bio-based Processing Oil (VIVASPE 10277), 20% HSFC (SEPTON^{™} BIO-series SF904, manufacturer Kuraray Co., Ltd.), <1% Processing Aids (antioxidant, silica, talc)

## Claims

1. A thermoplastic elastomer composition comprising
a. a block copolymer (I) comprising a polymer block containing a structural unit derived from an aromatic vinyl compound and a polymer block containing a structural unit derived from farnesene,
b. a block copolymer (II) comprising a polymer block containing a structural unit derived from an aromatic vinyl compound and a polymer block containing a structural unit derived from a conjugated diene compound,
c. a polyolefin elastomer, and
d. a plasticizer.

2. The thermoplastic elastomer composition according to claim 1 wherein the block copolymer (I) has a bio-based content measured according to ASTM 6868 and as further described in the description of equal to or more than 250.

3. The thermoplastic elastomer composition according to claim 1 or 2 wherein the block copolymer (I) has a bio-based content measured according to ASTM 6868 and as further described in the description is from 45% to 85%.

4. The thermoplastic elastomer composition according to any one of the claims above wherein the plasticizer is an oil with a bio-based content measured according to ASTM 6868 and as further described in the description of equal to or more than 75%.

5. The thermoplastic elastomer composition according to claim 4 wherein the plasticizer is a compound of general structure (III) : 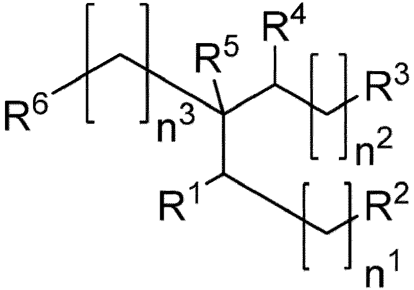 wherein each n1, n2 and n3 are independently 1 or 3, R1 to R6 are independently hydrogen or an unsubstituted alkyl group.

6. The thermoplastic elastomer composition according to any one of the claims above wherein the polyolefin elastomer comprises ethylene and propylene units.

7. The thermoplastic elastomer composition according to any one of the claims above wherein the block copolymer (II) is a hydrogenated styrene-b-ethylene/propylene-b-styrene block copolymer (SEPS), a styrene-b-ethylene/ethylene/propylene-b-styrene (SEEPS) or a hydrogenated styrene-b-butadiene-b-styrene (SEBS).

8. The thermoplastic elastomer composition according to any one of the claims above wherein the thermoelastic elastomer composition has a total bio-based content measured according to ASTM 6868 and as further described in the description of from 5% to 700.

9. A multilayer film comprising a core layer sandwiched between two skin layers wherein
a. the core layer comprises the thermoplastic elastomer composition according to any one of claims 1 to 8, and
b. the two skin layers each comprise at least one polyolefin.

10. The multilayer film according to claim 9 wherein the polyolefin in the skin layers is a homo ethylene or a homo propylene.

11. The multilayer film according to claim 9 or 10 wherein the skin layers independently further comprise
- a block copolymer (I) comprising a polymer block containing a structural unit derived from an aromatic vinyl compound and a polymer block containing a structural unit derived from farnesene,
- a block copolymer (II) comprising a polymer block (a1) containing a structural unit derived from an aromatic vinyl compound and a polymer block (a2) containing a structural unit derived from a conjugated diene compound, and/or
- a polyolefin elastomer.

12. The multilayer film according to any one of the claims 9 to 11 wherein the skin layers independently comprise a block copolymer comprising a polymer block containing a structural unit derived from an aromatic vinyl compound and a polymer block containing a structural unit derived from farnesene with a bio-based content measured according to ASTM 6868 and as further described in the description is from 45% to 85% in an amount from 5% to 200.

13. The multilayer film according to any one of the claims 9 to 12 wherein the multilayer film has a total bio-based content measured according to ASTM 6868 and as further described in the description of from 5% to 50%.

14. A laminate comprising the multilayer film according to any one of the claims 10 to 13 and a non-woven textile-like fabric based on polyamide (PA), polyethylene terephthalate (PET), polypropylene (PP), polyethylene (PE), cotton or a mixture thereof.

15. Use of the multilayer film according to any one of the claims 10 to 13 or the laminate according to claim 14 in disposable hygiene and medical products including diapers, face masks, covers, elastic patches and insect capturing sheets.
